# EUROPÄISCHE PATENTANMELDUNG

(11) **EP 1 473 499 A1**
(43) Veröffentlichungstag der Anmeldung: **03.11.2004**
(21) Anmeldenummer: 03010053.1
(22) Anmeldetag: 02.05.2003
(51) Int. Cl.: F16L 3/237, F16L 3/223, H02G 3/32

(54) **Halterung für langgestreckte Gegenstände**

(71) Anmelder: Hellermann Tyton GmbH, 25436 Tornesch (DE)
(72) Erfinder: Wien, Thomas, 22869 Schenefeld (DE); Stocker, Konrad, 72401 Haigerloch (DE)
(74) Vertreter: Glawe, Delfs, Moll & Partner

(57) **Zusammenfassung**

Halterung für langgestreckte Gegenstände, insbesondere Rohrpaare (9). Ein Halterungsteil (1) bildet zwei symmetrisch beiderseits eines Kupplungsteils (2) angeordnete Mulden (6) zur Aufnahme eines Rohrpaars. Der andere Halterungsteil (11), der über einen zweiten Kupplungsteil (12) mit dem ersten verbunden werden kann, weist zwei Flügel (14) auf, die sich im gekuppelten Zustand über die Mulden (6) erstrecken und die darin befindlichen Rohre (9) unter elastischer Vorspannung festhalten.

## Beschreibung

Die Erfindung betrifft eine Halterung für langgestreckte Gegenstände, die einen vorbestimmten Durchmesser aufweisen, beispielsweise Rohre. Diese sollen stabil, schwingungssicher und in definierter Lage gehalten werden. Die Halterung soll leicht und sicher montierbar sein. Diese Forderungen werden von der Halterung gemäß Anspruch 1 sowie vorzugsweise gemäß den Unteransprüchen erfüllt.

Demnach besteht die Halterung für langgestreckte Gegenstände aus einem ersten Halterungsteil, der mindestens eine Aufnahmemulde für einen langgestreckten Gegenstand und daneben einen ersten Kupplungsteil aufweist, sowie einem zweiten Halterungsteil, der einen zu dem ersten Kupplungsteil passenden zweiten Kupplungsteil und einen Flügel aufweist, der im Haltezustand sich abdeckend über der Mulde erstreckt. Vorzugsweise sind zwei Mulden und zwei Flügel jeweils gegenüberliegend mit mittig dazwischen angeordneten Kupplungsteilen vorgesehen, damit sich die Kräfte beiderseits ausgleichen. Die Abmessungen sind so getroffen, daß sich der bzw. die Flügel vorgespannt auf den in der Mulde liegenden Gegenstand elastisch auflegt bzw. auflegen. Dadurch wird der Gegenstand innerhalb eines bestimmten Toleranzbereich seines Durchmessers sicher und rüttelfrei gehalten. Die paarige Anordnung ist nicht nur im Hinblick auf den Kräfteausgleich sondern auch deshalb vorteilhaft, weil es viele Anwendungsfälle mit paarig zu verlegenden Rohrleitungen gibt, beispielsweise für Hydraulikzwecke.

Die Kupplungsteile sind so gestaltet, daß durch das Einkuppeln die gewünschte Relativlage der Mulde und des Flügels zustande kommt. Besonders vorteilhaft ist eine Ausführungsform, bei welcher die Kupplungsteile als Öffnung und Zapfen ausgebildet sind, die ineinander drehbar sind. In einer ersten Stellung nehmen die Halterungsteile eine Drehstellung zueinander ein, in welcher der Flügel parallel zu dem zu halternden Rohr liegt. Durch Verdrehung gelangt er in die Haltestellung, in der der Flügel sich auf den Gegenstand vorgespannt auflegt. Nach der Erfindung gelingt dies dadurch, daß formschlüssig zusammenwirkende Vor- und/oder Rücksprünge vorgesehen sind, die in der Montagedrehstellung das Zusammenfügen der Kupplungsteile gestatten, während sie in der Haltedrehstellung, in der der Flügel sich über der Mulde befindet, die Entfernung der Halterungsteile voneinander verhindern. Wenn die Kupplungsteile als Öffnung und Zapfen ausgebildet sind ist zweckmäßigerweise die Öffnung mit mindestens einer, zweckmäßigerweise zwei gegenüberliegenden Randausnehmungen versehen und weist der Zapfen entsprechend einen bzw. zwei Vorsprünge auf, die in der Montagestellung beim Zusammenfügen der Halterungsteile durch die Randausnehmung hindurchgeführt werden können und in der Haltedrehstellung abseits der Randausnehmungen hinter den Öffnungsrand greifen. Sämtliche Abmessungen sind dabei so gewählt, daß die gewünschte Vorspannung des Flügels auf dem langgestreckten Gegenstand vorbestimmten Durchmessers gerade dann zustande kommt, wenn der Zapfenvorsprung hinter den Öffnungsrand greift.

Damit die Halterungsteile sich nicht unbeabsichtigt aus der Haltestellung lösen, können Sicherungseinrichtungen vorgesehen sein, die zweckmäßigerweise als Rasteinrichtung ausgebildet sind, die der Rückdrehung eine Kraftschwelle entgegensetzen, die durch normalerweise im Betrieb auftretende Kräfte nicht überwunden werden kann. Die Rasteinrichtung kann beispielsweise von einer Rampe gebildet sein, die am hinteren Öffnungsrand vorgesehen ist und dem zapfenseitigen Vorsprung bei der einkuppelnden Bewegung eine sanft ansteigende Flanke bietet, die zur eingekuppelten Stellung hin scharf abfällt. Die Rampe kann zum elastischen Spannen der Einrichtung vorgesehen werden.

Bei einem weiteren Merkmal der Erfindung ist der Zapfen hohlgebohrt zur Aufnahme von beispielsweise einer Befestigungsschraube.

Die erfindungsgemäße Halterung besteht zweckmäßigerweise aus elastischem Kunststoff, beispielsweise glasfaserverstärktem Polyamid. Sie kann in unterschiedlichen Größen passend zu unterschiedlichen Rohrdurchmessern angeboten werden. Um sicherzustellen, daß in jedem Anwendungsfall zueinander passende Halterungsteile zur Hand sind, werden die beiden Halterungsteile einstückig durch eine leicht brechbare Materialbrücke hergestellt. Bis zur Verwendung bleiben sie miteinander verbunden und werden erst dann voneinander gelöst.

Die Erfindungen wird im folgenden näher unter Bezugnahme auf das in der Zeichnung dargestellte Ausführungsbeispiel erläutert. Es zeigen:

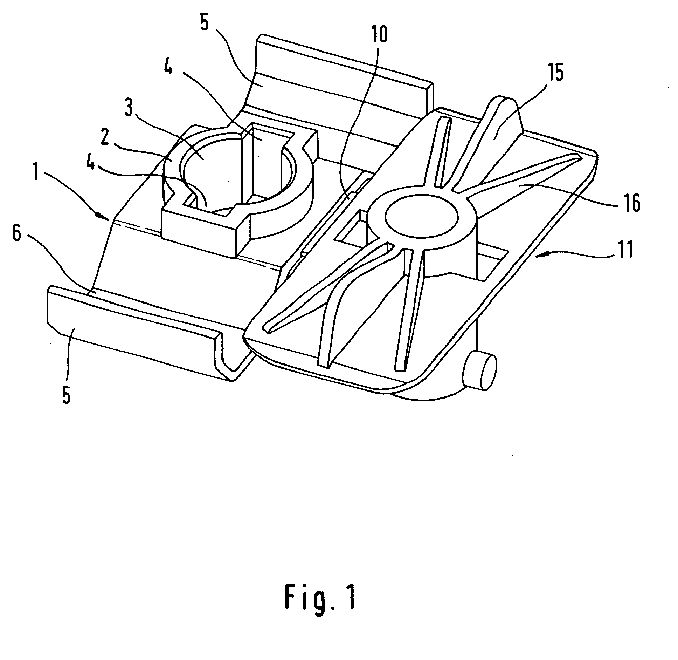

- Figur 1 und 2: perspektivische Darstellungen der Halterung im Herstellungszustand von unterschiedlichen Seiten,
- Figur 3: eine Seitenansicht der Halterung im Anwendungszustand, und
- Figur 4 bis 9: die Halterung in den unterschiedlichen Stellungen des Anwendungsfalls.

Der erste Halterungsteil weist in der Mitte eine stabile Hülse auf, deren Länge nicht wesentlich geringer als ihr innerer Durchmesser ist. Die darin gebildete Öffnung 3 weist auf gegenüberliegenden Seiten Nuten 4 auf.

Seitlich des die Hülse 2 enthaltenden Mittelteils des ersten Halterungsteils 1 befinden sich in symmetrischer Anordnung Seitenteile 5, in denen die Mulden 6 ausgebildet sind. Dabei handelt es sich um durchgehende, parallele Vertiefungen, deren äußere Seitenwände 7 das Entweichen der darin gehaltenen Rohre verhindert. Die Seitenteile 5 sind aus vergleichsweise dünnem Material hergestellt, das zwar zur Aufnahme der erforderlichen Kräfte in der Lage ist, aber elastisch nachgeben kann, um Durchmesserabweichungen der zu haltenden Rohre vom Standarddurchmesser Rechnung zu tragen.

Im Lieferzustand ist mit dem ersten Halterungsteil 1 über eine dünne Materialbrücke 10 der zweite Halterungsteil 11 verbunden, der mittig einen hohlen Zapfen 12 aufweist, dessen Außendurchmesser mit Spiel in die Öffnung 3 der Hülse 2 des ersten Halterungsteils 1 paßt und darin drehbar ist. Die Bohrung 13 innerhalb des Zapfens 12 dient zur Befestigung der Anordnung an einer haltenden Struktur, beispielsweise einer Wand.

In einer lotrecht zur Achse des Zapfens 12 liegenden Ebene weist der zweite Halterungsteil 11 zwei symmetrisch angeordnete Flügel 14 auf, deren Oberfläche auf der Seite, auf der sich auch der Zapfen 12 befindet, im wesentlichen eben ist. Auf der anderen Seite sind die Flügel 14 mit zwei symmetrisch angeordneten, hohen Rippen 15 versehen, die als Handhabe zum Drehen dieses Halterungsteils dienen. Außerdem können Verstärkungsrippen 16 vorgesehen sein.

Am freien Ende des Zapfens 12 befinden sich symmetrisch zwei seitliche Vorsprünge 18, deren Größe etwas geringer ist als das lichte Maß der Nuten 4, so daß beim Durchgang des Zapfens durch die Öffnung 3 die Vorsprünge 18 durch die Nuten 4 hindurchgeführt werden können. Die Fläche der Flügel 4 enthält in der axialen Projektion der Vorsprünge 18 Ausschnitte 19, die keine Bedeutung für die Halterungsfunktion haben, sondern nur dazu dienen, die Formung der Vorsprünge 18 in einer zweiteiligen Form zu erlauben.

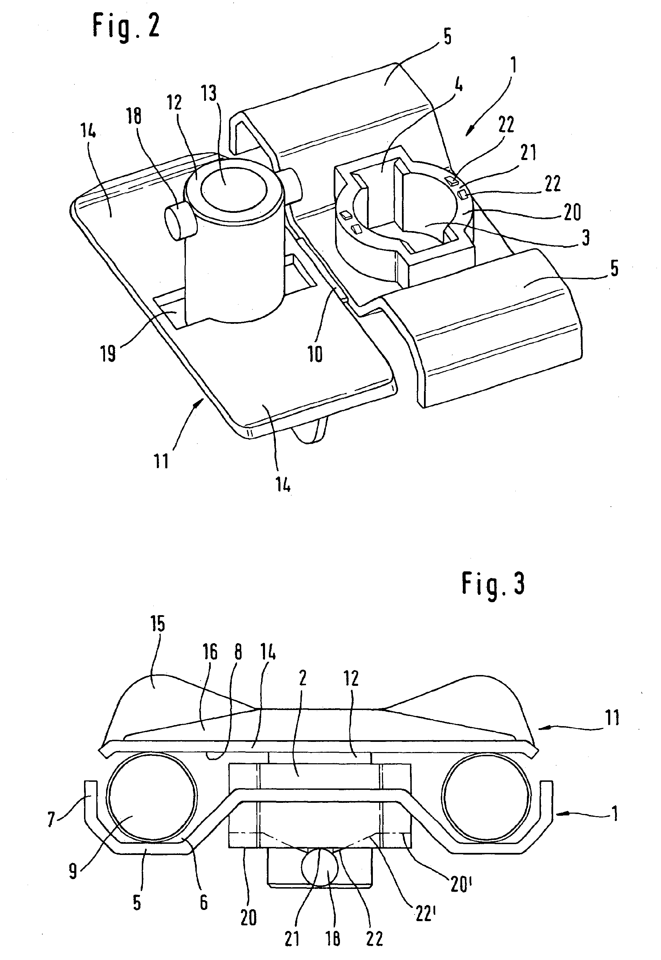

Der Abstand der Vorsprünge 18 von der Oberfläche der Flügel 14 ist gerade so groß, daß sich in der in Figur 3 dargestellten Haltestellung der Halterung zwischen dem Boden der Mulde 6 und der ihr zugewendeten Fläche 8 der Flügel 14 ein Abstand einstellt, der wenig geringer ist als der Durchmesser der zu haltenden Gegenstände 9, so daß diese bei entsprechender elastischer Verformung der Halterung mit einer vorbestimmten Kraft gehalten werden.

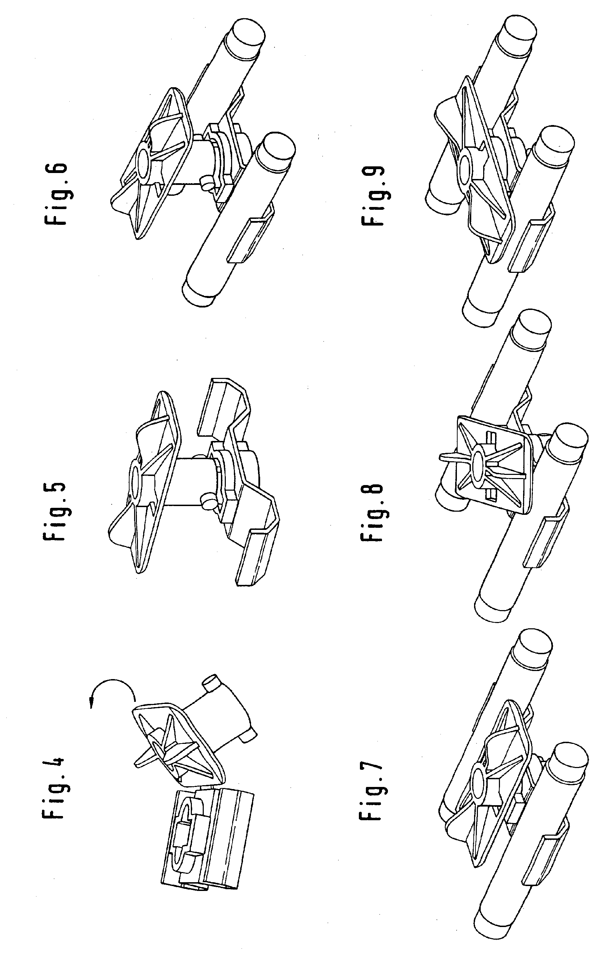

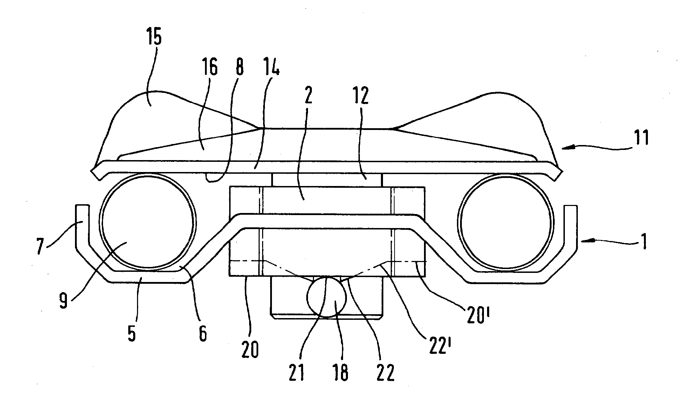

Figur 4 bis 9 veranschaulichen den Verwendungsvorgang. Zunächst (Figur 4) werden die Halterungsteile durch Brechen der Brücke 10 voneinander gelöst. Sodann (Figur 5 und 6) werden sie mit einander und mit den zu haltenden Gegenständen zusammengefügt. Die Kupplungsteile werden ineinander geschoben (Figur 7) und gedreht (Figur 8) bis sie nach einer Drehung um 90° (Figur 9) die vorgesehene Haltestellung erreicht haben.

Die Halterungsteile werden aus einem Material gefertigt, das einerseits eine leichte Formgebung erlaubt und andererseits die langdauernde, elastische Aufnahme der Haltekräfte ermöglicht, beispielsweise werden sie aus glasfaserverstärktem Polyamid im Spritzgießverfahren hergestellt.

Damit die Teile sich nicht unbeabsichtigt aus der Haltestellung zurückdrehen können, ist eine Rasteinrichtung vorgesehen. Am Öffnungsrand 20 sind beiderseits der Stelle 21, an der sich ein Vorsprung 18 in der Haltedrehstellung befinden soll, Rampen 22 vorgesehen, die der Stelle 21 ihre steilen Flanken zuwenden und auf der anderen Seite schwach geneigt sind. Beim einkuppelnden Drehen der Halterungsteile gleiten die Vorsprünge 18 leicht über die schwach geneigten Flanken hinweg, während sie in der Gegenrichtung die steilen Flanken entgegen der elastischen Kraft überwinden müssen, durch die sie in Anlage an dem Öffnungsrand 20 gehalten werden. Die Rampen 22 sind so hoch, daß während der normalen Benutzung nicht damit gerechnet zu werden braucht, daß Drehkräfte auftreten, durch die die Kupplung gelöst werden könnte.

In dem in Figur 3 mit durchgezogenen Linien gezeigten Ausführungsbeispiel ist vorausgesetzt, daß beim Einschieben des Zapfens 12 in die Hülse 2 eine so große axiale Kraft ausgeübt wird, daß die Betriebsverformung der Halterung erreicht wird und die Vorsprünge 18 bei der nun folgenden Verdrehung hinter den Öffnungsrand 20 greifen können. Eine leichtere Montage kann mit der Ausführung erreicht werden, die mit strichpunktierten Linien angedeutet ist. Dabei ist der Öffnungsrand 20' in der Nachbarschaft der Nuten 4 niedriger ist, so daß er von den Vorsprüngen 18 ohne besondere Kraftausübung erreicht werden kann. Zwischen diesem niedrigeren Rand 20' und der Raststelle 21 liegen stark ansteigende Rampen 22'. In diesem Fall wird die axiale Verspannung der Halterungsteile durch die beim Verdrehen derselben aufgewendete Drehkraft aufgebracht.

## Patentansprüche

1. Halterung für langgestreckte Gegenstände vorbestimmte Durchmessers wie Rohre, bestehend aus einem ersten Halterungsteil (1), der mindestens eine Aufnahmemulde (6) für einen langgestreckten Gegenstand (9) und daneben einen ersten Kupplungsteil (3) aufweist, und einem zweiten Halterungsteil (11), der einen zu dem ersten Kupplungsteil (3) passenden zweiten Kupplungsteil (12) und einen Flügel (14) aufweist, der im verbundenen Zustand der Kupplungsteile (3, 12) sich abdeckend über der Mulde (6) erstreckt.

2. Halterung nach Anspruch 1, **dadurch gekennzeichnet, daß** an den Halterungsteilen (1, 11) zwei Mulden (6) und zwei Flügel (14) gegenüberliegend mit mittig dazwischen angeordneten Kupplungsteilen (3, 12) vorgesehen sind.

3. Halterung nach Anspruch 1 oder 2, **dadurch gekennzeichnet, daß** der mindestens eine Flügel zur vorgespannten Auflage auf dem in der Mulde (6) liegenden Gegenstand (9) vorbestimmten Durchmessers bemessen ist und die Halterung elastisch nachgiebig ist.

4. Halterung nach einem der Ansprüche 1 bis 3, **dadurch gekennzeichnet, daß** die Kupplungsteile (3, 12) als ineinander drehbar geführte Öffnungen (3) und Zapfen (12) ausgebildet sind.

5. Halterung nach Anspruch 4, **dadurch gekennzeichnet, daß** formschlüssig zusammenwirkenden Vor- und/Rücksprünge (4, 18) vorgesehen sind, die in einer Montage-Drehstellung der Kupplungsteile (3, 12), in welcher sich der mindestens eine Flügel (14) nicht über der mindestens einen Mulde (6) befindet, die Lösung bzw. Verbindung der Kupplungsteile (3, 12) gestatten und in einer Halte-Drehstellung, in der der Flügel (14) sich über der Mulde (6) befindet, die Entfernung der Teile (1, 11) voneinander verhindern.

6. Halterung nach Anspruch 5, **dadurch gekennzeichnet, daß** die Öffnung (3) mindestens eine Randausnehmung (4) und der Zapfen (12) mindestens einen Randvorsprung (18) aufweist, der in der Montage-Drehstellung beim Zusammenfügen durch die Randausnehmung (4) paßt und in der Halte-Drehstellung abseits der Randausnehmung (4) hinter den Öffnungsrand (20) greift.

7. Halterung nach Anspruch 5 oder 6, **dadurch gekennzeichnet, daß** die Halterungsteile (1, 11) eine Rasteinrichtung (22) zum Sichern der Halte-Drehstellung aufweisen.

8. Halterung nach einem der Asprüche 4 bis 7, **dadurch gekennzeichnet, daß** der Zapfen (12) eine Befestigungsbohrung (13) enthält.

9. Halterung nach einem der Ansprüche 1 bis 8, **dadurch gekennzeichnet, daß** beide Halterungsteile (1, 11) im Herstellungszustand durch eine leicht brechbare Materialbrükke (10) einstückig miteinander verbunden sind.
